Europäisches Patentamt

European Patent Office

Office européen des brevets

(11) Veröffentlichungsnummer : **0 164 004**
**B1**

(12) **EUROPÄISCHE PATENTSCHRIFT**

(45) Veröffentlichungstag der Patentschrift :
02.11.89

(51) Int. Cl.⁴ : **E 03 F   7/10**

(21) Anmeldenummer : 85106096.2

(22) Anmeldetag : 17.05.85

(54) Schlammsaugewagen.

(30) Priorität : 19.05.84 DE 3418701
13.09.84 DE 3433571

(43) Veröffentlichungstag der Anmeldung :
11.12.85 Patentblatt 85/50

(45) Bekanntmachung des Hinweises auf die Patenterteilung : 02.11.89 Patentblatt 89/44

(84) Benannte Vertragsstaaten :
AT BE CH DE FR GB IT LI NL SE

(56) Entgegenhaltungen :
EP--A-- 0 051 340
DE--A-- 3 140 200
DE--B-- 2 719 599
US--A-- 3 392 114
US--A-- 3 750 885
US--A-- 4 134 174
US--A-- 4 284 500

(73) Patentinhaber : Klass, Georg, Dipl.-Ing.
Moorenweiser Strasse 4
D-8087 Türkenfeld (DE)

Kräutner, Georg, Dipl.-Ing.
Engadiner Strasse 24
D-8000 München 71 (DE)

(72) Erfinder : Klass, Georg, Dipl.-Ing.
Moorenweiser Strasse 4
D-8087 Türkenfeld (DE)
Erfinder : Kräutner, Georg, Dipl.-Ing.
Engadiner Strasse 24
D-8000 München 71 (DE)

(74) Vertreter : Patentanwälte Grünecker, Kinkeldey,
Stockmair & Partner
Maximilianstrasse 58
D-8000 München 22 (DE)

EP 0 164 004 B1

## Beschreibung

Die Erfindung betrifft einen Schlammsaugewagen mit einem an eine als Schlammpumpe verwendete Wasserstrahl- oder Vakuumdruckpumpe angeschlossenen Behälter, von dessen den Schlamm aufnehmenden Raumteil ein Filter einen Spülwasserraumteil separiert, aus welchem auch eine das Treibwasser für die Wasserstrahlpumpe liefernde Niederdruckpumpe gespeist werden kann, die wiederum über einen Feinfilter eine Hochdruckpumpe versorgt, wobei der Feinfilter ein zylinderförmiges Gehäuse mit einem Eintritt für das von der Niederdruckpumpe zugeführte Spülwasser und mit einem Austritt für eine Rückführung des verdickten Schmutzes zum Schlammaufnahmebehälter umfaßt sowie ein in dessen Längsmitte angeordnetes Rohr mit einem Anschluß für das der Saugseite der Hochdruckpumpe zuzuführende gereinigte Wasser.

Ein derartiger Schlammsaugewagen ist bereits aus der DE-B-27 19 599 bekannt. Ein solches Fahrzeug zeichnet sich dadurch aus, daß sein Wasserbedarf weitgehend aus dem von ihm selbst mitführbaren Wasservorrat gedeckt werden kann, der ständig erneuert wird, so daß die Arbeitsunterbrechungen, wie sie bei anderen bekannten Fahrzeugen durch Frischwassertanken an Hydranten in Kauf genommen werden müssen, bei einem gattungsgemäßen Fahrzeug nicht auftreten.

Für eingedickten Schlamm, der zum Aufsaugen erst mit Wasser verflüssigt werden muß und wie er z. B. in Sinkkästen vorkommt, oder für andere trockene Sauggüter bringt der Einsatz eines solchen Schlammsaugewagen ebenfalls besondere Vorteile.

Der auch als Hydrozyklon bezeichnete Feinfilter, wie er bei diesem bekannten Schlammsaugewagen verwendet wird, scheidet jedoch mit der in ihm erzeugten Fliehkraft nur Schmutzteilchen ab, deren spezifisches Gewicht wesentlich größer als Wasser ist. Bei häufigem Ein- und Ausschalten benötigen derartige Feinfilter nicht unerhebliche Zeit bis zum Erreichen des optimalen Betriebszustandes, so daß während dieser Phasen selbst die ansich ausreichend schweren Teilchen nicht abgeschieden werden.

Durch die DE-A-31 40 200 ist auch bereits ein Kanalreinigungsfahrzeug bekannt geworden, bei dem ein Sammelbehälter vorgesehen ist, der in ein Schlammabteil und ein Abteil für grob gereinigtes Schmutzwasser unterteilt ist. Im Abteil für das ungereinigte Schmutzwasser kann Wasser über eine erste Schmutzwasserpumpe entnommen werden, die das Schmutzwasser über einen als Zyklon arbeitenden Feststoffabscheider führt und das Wasser sodann über eine weitere Schmutzwasserpumpe in das Brauchwasserabteil des Fahrzeugbehälters pumpt. Da das am Ausgang dieser zweiten Schmutzwasserpumpe austretende, vorgereinigte Schlammwasser normalerweise noch immer nicht soweit gereinigt ist, daß es ohne die Gefahr einer Verstopfung der für die Kanalreinigung vorgesehenen Rohrreinigungsdüse zugeführt werden kann, ist im Brauchwasserabteil noch ein rotierendes Spaltfilter vorgesehen, über den aus dem Brauchwasserabteil sodann Spülwasser über eine Hochdruckpumpe abgezogen werden kann, die das Spülwasser der Spritzdüse für den eigentlichen Kanalreinigungsvorgang zuführt.

Aus der US-A-3 750 885 ist auch eine Siebanordnung bekannt gewesen, bei der in einem feststehenden zylindrischen Gehäuse mit Hilfe eines Drehantriebes ein an der angetriebenen Seite verschlossenes zylindrisches Sieb drehbar angeordnet ist, dessen der verschlossenen Seite gegenüberliegende freie Stirnseite mit einem Abflußrohr für gereinigte Flüssigkeit in Verbindung steht. In das zylindrische Gehäuse kann die zu reinigende Flüssigkeit an einem oberen Ende tangential eingeführt werden und die mit Verunreinigungen konzentrierte Flüssigkeit wird sodann aus dem Gehäuse an einem unteren Ende wieder abgeführt.

Der Erfindung liegt die Aufgabe zugrunde, einen Schlammsaugewagen der eingangs genannten Art so zu verbessern, daß ein noch störungsfreieres Arbeiten möglich ist.

Diese Aufgabe wird gemäß einer ersten Lösung der Erfindung dadurch gelöst, daß als Rohr 10, 110 ein mit Filteröffnungen 20, 120 versehenes, an seinem dem Anschluß 11 gegenüberliegenden Ende 19, 119 nicht offenes Filterrohr vorgesehen ist, daß das Filterrohr 10, 110 über einen Drehantrieb 8, 108 drehbar antreibbar ist, und daß ein schraubenförmig verlaufender, in dem Gehäuse angeordneter Abstreifer 9 vorgesehen ist, an dem das Filterrohr bei einer Drehung entlangstreicht.

Gemäß einer zweiten Lösung wird die Aufgabe erfindungsgemäß dadurch gelöst, daß als Rohr 110 ein mit Filteröffnungen 120 versehenes, an seinem dem Anschluß 11 gegenüberliegenden Ende 119 nicht offenes Filterrohr vorgesehen ist, daß das Filterrohr 110 über einen Drehantrieb 108 drehbar antreibbar ist, und daß eine in dem Gehäuse 115 angeordnete, sich entlang dem Filterrohr 110 erstreckende Wasserspritzvorrichtung 122 zur Reinhaltung des Filterrohres 110 vorgesehen ist.

Mit der Erfindung wird dem Feinfilter (Hydrozyklon) ein zusätzliches Filter impliziert. Seine Maschenweite ist natürlich enger als die des dem Spülwasserraumteil vorgeordneten Filters. Dieses zusätzliche Filter schließt die Lücken in dem Wirkbereich des Hydrozyklons, die vorstehend erläutert sind. Dabei kann ein solches Filterrohr so gestaltet werden, daß es sich gemäß der ersten Lösung dauernd selbstreinigt und seine Filterfunktion gleichmäßig aufrechterhält, indem es mit einem Drehantrieb ausgerüstet ist und drehend an einem im Gehäuse angeordneten Abstreifer entlangstreicht. Gemäß der zweiten Lösung findet ebenfalls eine Selbstreinigung mit Hilfe einer entsprechend ausgebildeten Wasserspritzvorrichtung statt, die vorzugsweise mit Wasser aus der Hochdruckkolbenwasserpumpe beaufschlagt wird. Ein so ausgerüsteter Schlammsaugewagen benötigt somit auch zum Reinigen des zusätzlichen Filters keine Arbeitsunterbrechungen. Die von ihm zurückgehaltenen Schmutzteile werden ohne weiters in den Schlammaufnahmebehälter zurückgeführt.

Gemäß einem Ausführungsbeispiel der Erfindung verläuft der schraubenförmige Abstreifer in voller Höhe des Abstandes zwischen dem Gehäuse und dem Filterrohr. Damit steht der Abstreifer einer fortlaufenden Rotation des Spülwassers in dem Feinfilter nicht im Wege, sondern hält diese Rotation über die gesamte Gehäuselänge wirksam aufrecht. Dabei tritt auch am Außenmantel des Filterrohrs eine Rotationsströmung auf, welche erheblich zur Selbstreinigung des Filterrohres beiträgt und den dort abgespülten Schmutz zur Rückführung in den Schlammaufnahmebehälter mitnimmt.

Gemäß der zweiten erfinderischen Lösung wird anstatt des schraubenförmigen, auch als Rakel zu bezeichnenden Abstreifers Flüssigkeit verwendet, mit der die Maschen des Feinfilterkörpers sehr gut ausgespült werden können. Die gleichfalls praktisch wie ein Abstreifer wirkende Wasserspritzvorrichtung benötigt zwar eine ständige Zuspeisung von Flüssigkeit, was aber nicht stört, weil sie innerhalb des Gehäuses des Feinfilters wieder in den Schlammbehälter zurückgeführt wird. Damit wird dieses Wasser zum sofortigen Entfernen des einmal erfaßten Schmutzes wieder verwendbar.

Dabei ist es dann auch von Vorteil, wenn die Wasserspritzvorrichtung mit Wasser aus der Hochdruckwasserkolbenpumpe beaufschlagt wird, derenwegen das aus dem Schlamm abgefilterte Wasser einen so hohen Reinheitsgrad erfordert. Mit Wasser so hohen Druckes lassen sich dann alle gewünschten Spritzeffekte an den Maschen des Filterrohres erzielen. Auf jeden Fall soll aber verhindert werden, daß dadurch zusätzlich Schmutzteile in das Innere des Filterrohres gepreßt werden. Es kommt daher darauf an, unter welchem räumlichen Winkel das Spritzwasser auf die Maschen des Filterrohres trifft.

Wenn die Wasserspritzvorrichtung in einer Spritznische, deren Seitenwände zum Rückprall des Wasserstrahls benutzt werden, angeordnet ist, kann dadurch unter Rückprall von Seitenwänden der Spritznische indirekt besprizt werden, so daß verhindert wird, daß zusätzliche Schmutzteile in das Innere des Filterrohres gelangen.

Bei diesem sehr vorteilhaften, mit der Wasserspritzvorrichtung arbeitenden Ausführungsbeispiel wird noch ein weiterer Vorteil durch Anordnung einer Wasservorratskammer zwischen dem offenen Ende des Filterrohres und dem zur Wasserhochdruckkolbenpumpe führenden Anschluß erreicht. Dadurch steht nach Inbetriebnahme sofort reines Wasser zum Besprizen des Filterrohres zur Verfügung.

Weitere Merkmale der Erfindung sind Gegenstand von weiteren Unteransprüchen. Insbesondere läßt sich der Reinigungseffekt noch verstärken, wenn die Drehrichtung des Drehantriebs für das Filterrohr der Drehrichtung des Spülwassers im Gehäuse entgegengesetzt ist.

Wenn vorstehend von einer Zylinderform des Gehäuses gesprochen ist, schließt dies natürlich konische Erweiterungen oder Verengungen in der Form mit ein.

Die Erfindung wird im folgenden anhand der in der Zeichnung schematisch dargestellten Ausführungsbeispiele weiter erläutert und beschrieben.

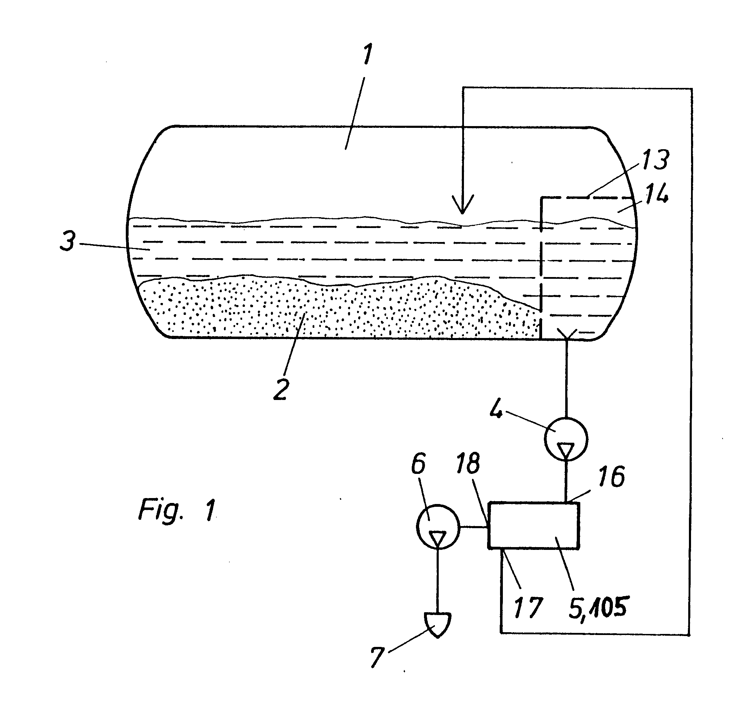

Figur 1 zeigt einen Schlammaufnahmebehälter mit Spülwasserraumteil und Anschlüssen von einem erfindungsgemäßen Schlammsaugewagen,

Figur 2 zeigt einen erfindungsgemäßen Feinfilter nach einem ersten Ausführungsbeispiel der Erfindung,

Figur 3 zeigt eine Stirnansicht auf den Feinfilter der Figur 2,

Figur 4 zeigt ein weiteres Ausführungsbeispiel eines erfindungsgemäßen Feinfilters,

Figur 5 zeigt das Filterrohr des in Figur 4 dargestellten Feinfilters in einer Stirnansicht.

Der auf einem Schlammsaugewagen angeordnete Schlammaufnahmebehälter 1 wird von einer als Wasserstrahl- oder Vakuum/Druckpumpe ausgebildeten Schlammpumpe mit Schlamm beschickt, der aus Abwasserkanälen oder Sinkkästen über Schlauchleitungen zugeführt und zu einer Deponie abtransportiert werden soll. In dem Aufnahmebehälter 1 setzen sich die schwereren Schlammteile zu Boden, wie bei 2 angedeutet ist, während sich viel Schmutzwasser 3 darüber hält und von dem in einem durch ein erstes Filter 13 separierten Raumteil 14 angesammelten Brauchwasser abgesetzt ist. Dieses kann einer Niederdruckpumpe 4 zugeleitet werden, welche z. B. auch das Treibwasser für die Wasserstrahlpumpe liefert. Ist der Schlammsaugewagen mit einer Einrichtung zum Reinigen von Abwasserkanälen ausgerüstet, wobei Wasser unter sehr hohem Druck eingesetzt wird, das rückwärts aus einer am Anfang eines Hochdruckschlauches befestigten Düse 7 austritt und gleichzeitig mit seiner Rückstoßkraft die Düse mitsamt ihrem Schlauch durch den Abwasserkanal zieht, erfordert die Hochdruckpumpe 6 ein wesentlich besser gefiltertes Wasser als die Niederdruckpumpe 4.

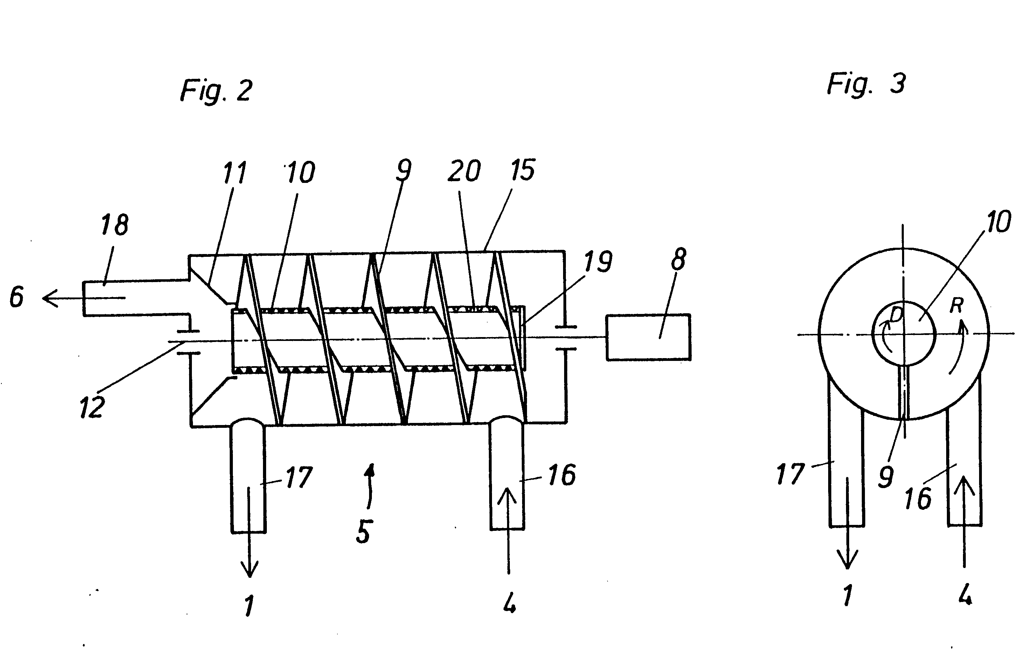

Zu diesem Zweck wird ein Feinfilter 5 verwendet, dessen prinzipieller Aufbau im folgenden anhand von Figur 2 weiter erläutert wird.

Der Filter besteht aus einem stationären Zylinder 15 als Gehäuse, dem an seinem einen Ende bei 16 von der Niederdruckpumpe 4 das zu reinigende Wasser tangential zugespeist wird. An der Innenwand des Zylinders 15 gerät das Wasser in Rotation, wobei die schwereren Schmutzteilchen durch die Fliehkraft an den Mantel des Zylinders 15 gelangen und an dem anderen Ende bei 17 wieder ausgeschleudert und zum Schlammaufnahmebehälter 1 zurückgeführt werden. In der Längsmitte des Gehäuses 15 verbleibt dabei eine weitgehend gereinigte Wassermenge. Hier ist ein Rohr angeordnet, das mit Filteröffnungen 20 versehen ist. An dem dem Anschluß 18 gegenüberliegenden Ende ist das Filterrohr 10 als nicht offenes Filterrohr ausgebildet.

Das durch diesen zweiten Feinfilter in das Innere des Filterrohres 10 eintretende Wasser gelangt somit weitgehend gereinigt aus dem offenen Rohrende durch einen konischen Anschluß 11 in den zur Saugseite der Hochdruckpumpe 6 führenden Anschlußstutzen 18.

Zur ständigen Selbstreinigung des Filterrohres 10 ist es um eine Achse 12 drehbar in dem Gehäuse 15 gelagert und wird von einem Motor 8 gedreht, und zwar vorzugsweise in einer Richtung D (sh. Figur 3) die entgegen der Rotationsrichtung R des Wasser verläuft.

Bei dem in Figur 2 dargestellten Ausführungsbeispiel des Feinfilters ist außerdem ein Abstreifer 9 vorgesehen, der im Gehäuse 15 angeordnet ist und über die Länge des Gehäuses 15 schraubenförmig verläuft, und zwar über die volle Höhe des Abstandes zwischen dem Gehäuse 15 und dem Filterrohr 10. Dadurch wird die Rotationsströmung des Wassers auch an dem Außenmantel des Filterrohres 10 intensiviert, was zur Selbstreinigung beiträgt.

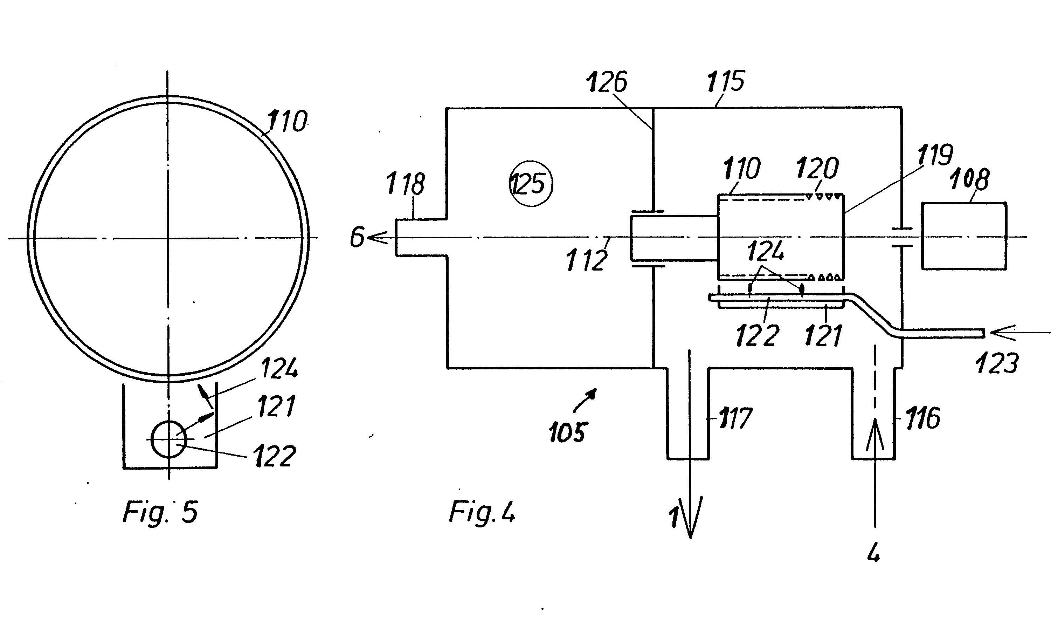

In den Figuren 4 und 5 ist ein weiteres, sehr vorteilhaft arbeitendes Feinfilter 105 gemäß der Erfindung dargestellt. Die prinzipielle Wirkungsweise des Feinfilters entspricht der anhand der Figuren 2 und 3 erläuterten Wirkungsweise.

Dem aus einem stationären Zylinder bestehenden Gehäuse 115 wird an seinem einen Ende bei 116 das zu reinigende Wasser von der Niederdruckpumpe 4 tangential eingespeist. An der Innenwand des Zylinders gerät das Wasser in Rotation, wobei die schwereren Schmutzteilchen durch die Fliehkraft an den Mantel des Zylinders 115 gelangen und an dem anderen Ende bei 117 wieder herausgeschleudert und zum Schlammaufnahmebehälter 1 zurückgeführt werden. In der Längsmitte des Gehäuses 115 verbleibt dabei weitgehend gereinigtes Wasser.

Auch bei diesem Ausführungsbeispiel ist an der Längsmitte ein Rohr 110 angeordnet, das mit Filteröffnungen 120 versehen und an seinem einen Ende 119 verschlossen ist. Am anderen Ende ist das Rohr 110 offen und steht unter Saugwirkung über die Hochdruckwasserkolbenpumpe 6.

Zur ständigen Selbstreinigung wird auch das Filterrohr 110 um eine Achse 112 drehbar in dem Gehäuse 115 gelagert und kann von einem Motor 108 gedreht werden. Beim Drehen streicht der Außenmantel des Rohres 110 bei diesem vorteilhaften Ausführungsbeispiel an einer Spritznische 121 vorbei, in der sich ein Spritzrohr 122 parallel zur Achse 112 des Filterrohres 110 erstreckt. Das Spritzrohr 122 wird bei 123 mit Wasser von der Hochdruckpumpe versorgt. Die aus dem Spritzrohr 122 austretenden Wasserstrahlen 124 prallen, wie vor allem Figur 5 zeigt, zunächst auf eine der Seitenwände der Spritznische 121 und werden dort in Richtung auf den Außenmantel des Filterrohres 110 reflektiert. Das Spritzwasser fließt bei 117 wieder in den Schlammbehälter zurück und nimmt dabei den abgelösten Schmutz mit.

Zwischen dem offenen Ende des Filterrohres 110 und dem zur Saugseite der Hochdruckwasserkolbenpumpe 6 führenden Anschluß 118 ist eine Wasservorratskammer 125 angeordnet, die von dem Gehäuse 115 durch eine Trennwand 126 getrennt ist. Dadurch steht unmittelbar nach Inbetriebnahme sofort reines Wasser zum Bespritzen des Filterrohres zur Verfügung.

**Patentansprüche**

1. Schlammsaugewagen mit einem an eine als Schlammpumpe verwendete Wasserstrahl- oder Vakuum-Pumpe angeschlossenen Behälter (1), von dessen den Schlamm aufnehmenden Raumteil ein Filter (13) einen Spülwasserraumteil (14) separiert, aus welchem auch eine das Treibwasser für die Wasserstrahlpumpe liefernde Niederdruckpumpe (4) gespeist werden kann, die wiederum über einen Feinfilter (5, 105) eine Hochdruckpumpe (6) versorgt, wobei der Feinfilter (5, 105) ein zylinderförmiges Gehäuse (15, 115) mit einem Eintritt (16, 116) für das von der Niederdruckpumpe (4) zugeführte Spülwasser und einen Austritt (17, 117) für eine Rückführung des verdickten Schmutzes zum Schlammaufnahmebehälter (1) umfaßt, sowie ein in dessen Längsmitte angeordnetes Rohr (10, 110), mit einem Anschluß (11) für das der Saugseite der Hochdruckpumpe (6) zuzuführende gereinigte Wasser, dadurch gekennzeichnet, daß als Rohr (10, 110) ein mit Filteröffnungen (20, 120) versehenes, an seinem dem Anschluß (11) gegenüberliegenden Ende (19, 119) nicht offenes Filterrohr vorgesehen ist, daß das Filterrohr (10, 110) über einen Drehantrieb (8, 108) drehbar antreibbar ist, und daß ein schraubenförmig verlaufender, in dem Gehäuse angeordneter Abstreifer (9) vorgesehen ist, an dem das Filterrohr bei einer Drehung entlangstreicht.

2. Schlammsaugewagen nach Anspruch 1, dadurch gekennzeichnet, daß der schraubenförmig verlaufende Abstreifer (9) sich über die volle Höhe des Abstandes zwischen dem Gehäuse (15) und dem Filterrohr (10) erstreckt.

3. Schlammsaugewagen mit einem an eine als Schlammpumpe verwendete Wasserstrahl- oder Vakuum-Pumpe angeschlossenen Behälter (1), von dessen den Schlamm aufnehmenden Raumteil ein Filter (13) einen Spülwasserraumteil (14) separiert, aus welchem auch eine das Treibwasser für die Wasserstrahlpumpe liefernde Niederdruckpumpe (4) gespeist werden kann, die wiederum über einen Feinfilter (5, 105) eine Hochdruckpumpe (6) versorgt, wobei der Feinfilter (5, 105) ein zylinderförmiges Gehäuse (15, 115) mit einem Eintritt (16, 116) für das von der Niederdruckpumpe (4) zugeführte Spülwasser und einen Austritt (17, 117) für eine Rückführung des verdickten Schmutzes zum Schlammaufnahmebehälter (1) umfaßt, sowie ein in dessen Längsmitte angeordnetes Rohr (10, 110), mit einem Anschluß (11) für das der Saugseite der Hochdruckpumpe (6) zuzuführende gereinigte Wasser, dadurch gekennzeichnet, daß als Rohr (110) ein mit Filteröffnungen (120) versehenes, an seinem dem Anschluß (11) gegenüberliegenden Ende (119) nicht offenes Filterrohr vorgesehen ist, daß das Filterrohr (110) über einen Drehantrieb (108) drehbar antreibbar ist, und daß eine in dem Gehäuse (115) angeordnete, sich entlang dem Filterrohr (110) erstreckende Wasserspritzvorrichtung (122) zur Reinhaltung des Filterrohres (110) vorgesehen ist.

4. Schlammsaugewagen nach Anspruch 3, dadurch gekennzeichnet, daß die Wasserspritzvorrichtung (122) mit Wasser aus der Hochdruckkolbenwasserpumpe (6) beaufschlagt wird (bei 123).

5. Schlammsaugewagen nach Anspruch 3 oder 4, dadurch gekennzeichnet, daß die Wasserspritzvorrichtung (122) in einer Spritznische (121) angeordnet ist, deren Seitenwände zum Rückprall der Wasserstrahlen benutzt werden.

6. Schlammsaugewagen nach einem der Ansprüche 3 bis 5, dadurch gekennzeichnet, daß zwischen dem offenen Ende des Filterrohres (110) und dem zur Hochdruckwasserkolbenpumpe (6) führenden Anschluß (118) eine Wasservorratskammer (125) angeordnet ist.

7. Schlammsaugewagen nach einem der Ansprüche 1 bis 6, dadurch gekennzeichnet, daß die Drehrichtung (D) des Drehantriebs der Drehrichtung (R) des Spülwassers im Gehäuse (15, 115) entgegengesetzt ist.

8. Schlammsaugewagen nach einem der Ansprüche 1 bis 7, dadurch gekennzeichnet, daß sich das Filterrohr (10) über die Länge des Gehäuses (15) erstreckt.

9. Schlammsaugewagen nach einem der Ansprüche 1 bis 8, dadurch gekennzeichnet, daß der Anschluß zwischen dem offenen Ende des Filterrohres (10) und dem zur Saugseite der Hochdruckpumpe (6) führenden Anschlußstutzen (18) konisch ist.

**Claims**

1. Mud suction vehicle having a tank (1) connected to a water-jet pump or vacuum pump used as a mud pump, a filter (13) separating the mud-collecting compartment of the tank from a wash water compartment (14), from which a low-pressure pump (4) supplying the driving water for the water-jet pump may also be supplied, which low-pressure pump in turn supplies a high-pressure pump (6) through a fine filter (5, 105), the fine filter (5, 105) comprising a cylindrical housing (15, 115), having an inlet (16, 116) for the wash water supplied by the low-pressure pump (4) and an outlet (17, 117) for a return of the thickened mud to the mud collecting tank (1), and a tube (10, 110) arranged in the centre of its length, having a connection (11) for the cleaned water to be supplied to the suction side of the high-pressure pump (6), characterized in that a filter tube provided with filter orifices (20, 120) and not open at its end (19, 119) opposite the connection (11) is provided as tube (10, 110), that the filter tube (10, 110) can be rotatably driven via a rotary drive (8, 108), and that a helicoidally extending skimmer (9), along which the filter tube sweeps during a revolution, is provided arranged in the housing.

2. Mud suction vehicle according to Claim 1, characterized in that the helicoidally extending skimmer (9) extends across the total height of the interval between the housing (15) and the filter tube (10).

3. Mud suction vehicle having a tank (1) connected to a water-jet pump or vacuum pump used as a mud pump, a filter (13) separating the mud-collecting compartment of the tank from a wash water compartment (14), from which a low-pressure pump (4) supplying the driving water for the water-jet pump may also be supplied, which low-pressure pump in turn supplies a high-pressure pump (6) through a fine filter (5, 105), the fine filter (5, 105) comprising a cylindrical housing (15, 115), having an inlet (16, 116) for the wash water supplied by the low-pressure pump (4) and an outlet (17, 117) for a return of the thickened mud to the mud-collecting tank (1), and a tube (10, 110) arranged in the centre of its length, having a connection (11) for the cleaned water to be supplied to the suction side of the high-pressure pump (6), characterized in that a filter tube provided with filter orifices (120) and not open at its end (119) opposite the connection (11) is provided as tube (110), that the filter tube (110) can be rotatably driven via a rotary drive (108), and that a water spray device (122) extending along the filter tube (110) is provided, arranged in the housing (115), to keep the filter tube (110) clean.

4. Mud suction vehicle according to Claim 3, characterized in that the water spray device (122) is supplied with water (at 123) from the high-pressure water piston pump (6).

5. Mud suction vehicle according to Claim 3 or 4, characterized in that the water spray device (122) is arranged in a spraying recess (121), the side walls of which are used for the rebound of the water jets.

6. Mud suction vehicle according to one of Claims 3 to 5, characterized in that a water supply chamber (125) is arranged between the open end of the filter tube (110) and the connection (118) leading to the high-pressure water piston pump (6).

7. Mud suction vehicle according to one of Claims 1 to 6, characterized in that the direction of rotation (D) of the rotary drive is opposite to the direction of rotation (R) of the wash water in the housing (15, 115).

8. Mud suction vehicle according to one of Claims 1 to 7, characterized in that the filter tube (10) extends along the length of the housing (15).

9. Mud suction vehicle according to one of Claims 1 to 8, characterized in that the connection between the open end of the filter tube (10) and the connecting branch (18) leading to the suction side of the high-pressure pump (6) is conical.

## Revendications

1. Véhicule aspirateur de boues comprenant un réservoir (1) raccordé à un éjecteur à eau ou à une pompe à vide utilisés comme pompe à boue, dont le volume recevant les boues est séparé par un filtre (13) d'un volume d'eau de rinçage (14) à partir duquel peut également être alimentée une pompe basse pression (4) qui fournit l'eau motrice pour l'éjecteur à eau et qui alimente à son tour une pompe haute pression (6) par l'intermédiaire d'un filtre fin (5, 105), lequel filtre fin (5, 105) comprend un carter cylindrique (15, 115) avec une entrée (16, 116) pour l'eau de rinçage amenée par la pompe basse pression (4) et une sortie (17, 117) pour un retour de la crasse solidifiée vers le réservoir de réception de boues (1) ainsi qu'un tube (10, 110) placé dans l'axe longitudinal dudit carter et muni d'un raccord (11) pour l'eau épurée devant être amenée au côté aspiration de la pompe haute pression (6), caractérisé en ce qu'il est prévu comme tube (10, 110) un tuyau-filtre muni d'orifices de filtrage (20, 120) et fermé à son extrémité (19, 119) opposée au raccord (11), que le tuyau-filtre (10, 110) peut être entraîné en rotation par l'intermédiaire d'un mécanisme de mise en rotation (8, 108), et qu'il est prévu un racleur (9) de forme hélicoïdale monté dans le carter et sur lequel le tuyau-filtre frotte lors d'une rotation.

2. Véhicule aspirateur de boues selon la revendication 1, caractérisé en ce que le racleur (9) de forme hélicoïdale s'étend sur toute la hauteur de la distance entre le carter (15) et le tuyau-filtre (10).

3. Véhicule aspirateur de boues comprenant un réservoir (1) raccordé à un éjecteur à eau ou à une pompe à vide utilisés comme pompe à boue, dont le volume recevant les boues est séparé par un filtre (13) d'un volume d'eau de rinçage (14) à partir duquel peut également être alimentée une pompe basse pression (4) qui fournit l'eau motrice pour l'éjecteur à eau et qui alimente à son tour une pompe haute pression (6) par l'intermédiaire d'un filtre fin (5, 105) lequel filtre fin (5, 105) comprend un carter cylindrique (15, 115) avec une entrée (16, 116) pour l'eau de rinçage amenée par la pompe basse pression (4) et une sortie (17, 117) pour un retour de la crasse solidifiée vers le réservoir de réception de boues (1) ainsi qu'un tube (10, 110) placé dans l'axe longitudinal dudit carter et muni d'un raccord (11) pour l'eau épurée devant être amenée. au côté aspiration de la pompe haute pression (6), caractérisé en ce qu'il est prévu comme tube (110) un tuyau-filtre muni d'orifices de filtrage (120) et fermé à son extrémité (119) opposée au raccord (11), que le tuyau-filtre (110) peut être entraîné en rotation par l'intermédiaire d'un mécanisme de mise en rotation (108), et qu'il est prévu un dispositif de projection d'eau (122) pour maintenir propre le tuyau-filtre (110), qui est disposé dans le carter (115) et qui s'étend le long du tuyau-filtre (110).

4. Véhicule aspirateur de boues selon la revendication 3, caractérisé en ce que le dispositif de projection d'eau (122) est alimenté en eau (en 123) provenant de la pompe à eau à piston haute pression (6).

5. Véhicule aspirateur de boues selon l'une des revendications 3 ou 4, caractérisé en ce que le dispositif de projection d'eau (122) est installé dans une niche de projection (121) dont les parois latérales sont utilisées pour le rejaillissement des jets d'eau.

6. Véhicule aspirateur de boues selon l'une des revendications 3 à 5, caractérisé en ce qu'entre l'extrémité ouverte du tuyau-filtre (110) et le raccord (118) conduisant à la pompe à eau à piston haute pression (6) est disposée une réserve d'eau (125).

7. Véhicule aspirateur de boues selon l'une des revendications 1 à 6, caractérisé en ce que le sens de rotation (D) du mécanisme de mise en rotation est opposé au sens de rotation (R) de l'eau de rinçage dans le carter (15, 115).

8. Véhicule aspirateur de boues selon l'une des revendications 1 à 7, caractérisé en ce que le tuyau-filtre (10) s'étend sur la longueur du carter (15).

9. Véhicule aspirateur de boues selon l'une des revendications 1 à 8, caractérisé en ce que le raccord entre l'extrémité ouverte du tuyau-filtre (10) et la tubulure de raccordement (18) menant au côté aspiration de la pompe haute pression (6) est conique.

Fig. 1

Fig. 2

Fig. 3

11    10    9    20    15

18

6

19

8

12

17    16

5

1    4

EP 0 164 004 B1

10

D    R

17    9    16

1    4

Fig. 5

Fig. 4

EP 0 164 004 B1